# EUROPEAN PATENT SPECIFICATION

(11) **EP 3 680 635 B1**
(45) Date of publication and mention of the grant of the patent: **26.01.2022**
(21) Application number: 19213128.2
(22) Date of filing: 03.12.2019
(51) Int. Cl.: G01K 3/00, G06K 19/073, B64C 9/00, B64C 13/24, G06K 19/07, G06K 19/077, B64D 45/00

(54) **ACTUATOR SYSTEM FOR AN AIRCRAFT AND METHOD OF DETERMINING THAT A MECHANICAL ELEMENT OF AN ACTUATOR SYSTEM HAS EXPERIENCED AN OVERHEAT CONDITION.**
AKTUATORSYSTEM FÜR EIN FLUGZEUG UND EINE METHODE ZUR BESTIMMUNG, DASS EIN MECHANISCHES ELEMENT EINES AKTORSYSTEMS EINEN ÜBERHITZUNGSZUSTAND ERFAHREN HAT.
SYSTÈME D'ACTIONNEUR POUR UN AÉRONEF ET PROCÉDÉ DE DÉTERMINATION DE SURCHAUFFE D'UN ÉLÉMENT MÉCANIQUE D'UN SYSTÈME D'ACTIONNEUR.

(30) Priority: 09.01.2019 US 201916243481
(43) Date of publication of application: 15.07.2020
(73) Proprietor: Hamilton Sundstrand Corporation, Charlotte, NC 28217-4578 (US)
(72) Inventor: ANKNEY, Darrell E., Dixon, IL 61021 (US); DOLFI, Eugene W., Rockford, IL 61126-8081 (US)
(74) Representative: Dehns

(56) References cited:
- EP-A1- 3 208 189
- EP-A1- 3 381 795
- EP-A1- 3 381 796
- EP-A1- 3 388 332
- WO-A1-02/073523
- US-B2- 10 095 971

## Description

### BACKGROUND

Exemplary embodiments pertain to the art of monitoring and, in particular, utilizing radio-frequency identification (RFID) to over-temperature conditions and to identify actuators where such conditions occurred.

Modern aircraft often use a variety of aircraft mechanical actuation systems for primary and secondary flight controls. Such actuator systems can include temperature sensitive devices during system operation. Occasionally, these systems approach, and/or exceed the design limits of one or more of system devices or elements. A temperature monitoring system is necessary to ensure damage is not done to these systems and can be used in fault prediction. EP 3208189 A1, EP 3381796 A1, and EP 3388332 A1 disclose known actuator monitoring systems.

In aircraft, current temperature monitor circuitry adds additional wiring to the wing, and therefore increases the weight of the system. This can add weight to flight control surface (e.g., wings) which is undesirable.

### BRIEF DESCRIPTION

According to a first aspect, there is provided an actuator system according to claim 1.

According to a second aspect, there is provided a method of determining that a mechanical element of an actuator system has experienced an overheat condition according to claim 6.

### BRIEF DESCRIPTION OF THE DRAWINGS

The following descriptions should not be considered limiting in any way. With reference to the accompanying drawings, like elements are numbered alike:
FIG. 1 shows an example of an aircraft on which embodiments disclosed herein can be implemented;
FIG. 2 shows an example configuration of elements of an actuator system as deployed around and aircraft;
FIG. 3 shows an example of an example RFID tag;
FIGs. 4A and 4B show a temperature RFID tag where an RFID tag is connected to a temperature sensitive element in a normal operating state where threshold temperature has not been exceed state and an open (over temperature) state where the threshold temperature has been exceed, respectively; and
FIG. 5 shows an embodiment of a system where multiple tags are used to determine a temperature of an element.

### DETAILED DESCRIPTION

A detailed description of one or more embodiments of the disclosed apparatus and method are presented herein by way of exemplification and not limitation with reference to the Figures.

As discussed generally above, temperature sensors are known. Such sensors can require the connection of wires be added to an aircraft and result in added weight. In general, disclosed herein is a radio frequency identification (RFID) based system

Such a design can achieve a technical effect of removing the aforementioned wiring and connectors and result in increased time between failures and reduced cost of one or both of maintenance and installation as no wires are needed.

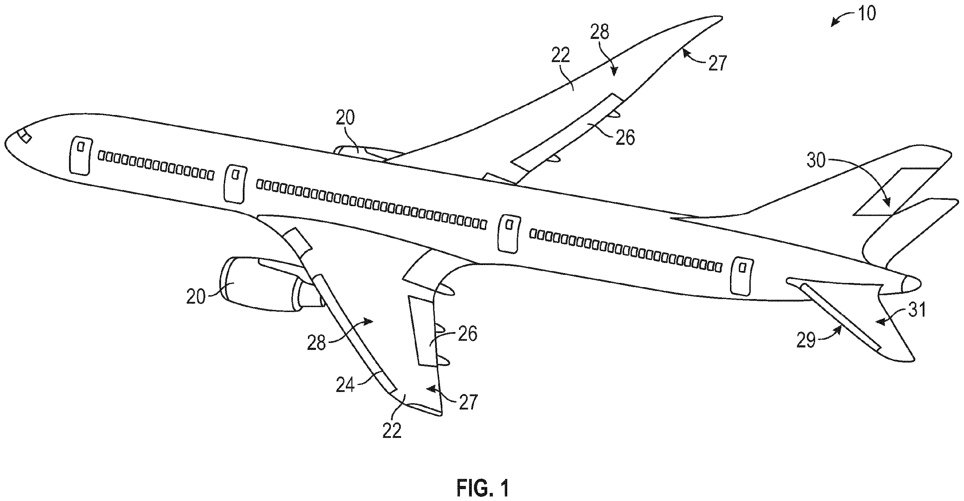

FIG. 1 illustrates an example of a commercial aircraft 10 having aircraft engines 20 that may embody aspects of the teachings of this disclosure. The aircraft 10 includes two wings 22 that each include one or more slats 24 and one or more flaps 26. The aircraft further includes ailerons 27, spoilers 28, horizontal stabilizer trim tabs 29, rudder 30 and horizontal stabilizer 31.

The term "control surface" used herein includes but is not limited to either a slat or a flap or any of the above described surfaces (ailerons 27, spoilers 28, horizontal stabilizer trim tabs 29, rudder 30 and horizontal stabilizer 31). It will be understood that the slats 24 and/or the flaps 26 can include one or more slat/flap panels that move together.

Each of the control surfaces can be moved by one or more actuators that are part of actuator system. The actuator system can include one or more of: a flap rotary actuator, flap drop boxes, slat rotator actuators, angle gear boxes, a controller that control the position of the slats/flaps by controlling operation of the actuators, slat and flap disconnect sensors, slat and flap skew sensors, flat and slat position sensors, slat driveline torque shafts, flap driveline torque sensors, flap and slat power drive units.

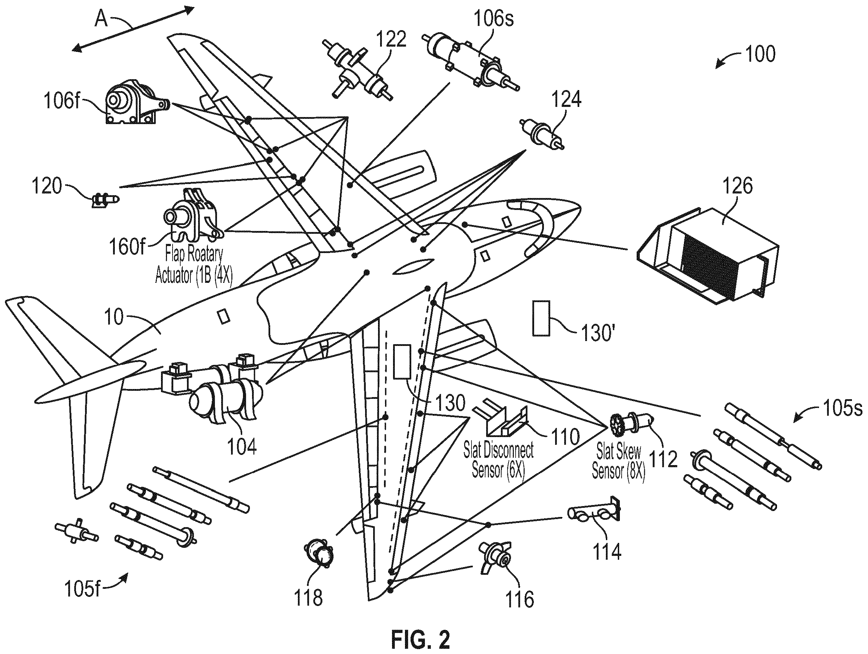

With reference now to FIG. 2, one or more elements of the actuator system are shown disposed about the commercial aircraft 10. The particular location each element can be varied and are the arrows in FIG. 2 are used to provide a general location where the element could be located on the aircraft 10. While multiple version of certain elements are shown (e.g., slat and flap torque shafts) the number of shafts is not meant as limiting but, rather, to give a visual depiction of alternative versions of such elements.

FIG. 2 illustrates, generally, an actuator system 100 that can control and monitor the location of one or more control surfaces of an aircraft. The actuator system 100 of FIG. 2 can be used, in particular, to control the position of one or more the flaps 26, slats 24, ailerons 27, spoilers 28, horizontal stabilizer trim tabs 29, rudder 30 and horizontal stabilizer 31 of FIG. 1.

For clarity, both FIG. 1 and FIG. 2 will be referred in the following description of elements of the actuator system. The system 100 includes one or more a power drive units 104 (or drive unit for short). The drive unit 104 can cause a rotation of a drive shaft 105 in order to simultaneously move slats 24 and/or flaps in either direction in or out as generally indicated by arrow A. The drive shaft(s) for the flaps are can also be flap driveline torque shafting and are labelled 105f and the drive shaft(s) for the slats are can also be stat driveline torque shafting and are labelled 105s.

To convert the rotary motion of the drive shaft 105 into linear motion to move the flaps 26, one or move flap actuators 106f are provided. In one embodiment, each flap 26 has its own flap actuator 106f. To convert the rotary motion of the drive shaft 105 into linear motion to move the slats 24, one or move slat actuators 106s are provided. In one embodiment, each slat 26 has its own slat actuator 106s.

The flap actuators 106f and the slat actuators 106s can be rotatory actuators in one embodiment and may be referred to as such from time to time herein.

The system 100 can also include one or more slat disconnect sensors 110 and one or more slat skew sensors 112, one or more slat/flap position sensors 114, one or more slat position sensor unit mounting brackets 116, one or more flap position sensor unit mounting brackets 118, one or more flap skew sensors 120, one or more flap drop boxes 122, and one or more angle gear boxes 124.

The system 100 also includes a controller 126. Based on inputs from the cockpit or other location, the controller 126 can cause the movement of control surfaces in a known manner.

Each of the elements of the system 100 can include one or more RFID tags attached to or disposed near it. One of the one or more temperature RFID tags used in combination with an RFID reader 130 to send a wireless indication when a temperature at one of the elements of the system 100 exceeds a threshold. That is, the temperature RFID tags are constructed such to only transmit when information to the reader when the temperature exceeds a predetermined level. This can be achieved by having, for a example, a small (e.g., MEMS) temperature sensors with a threshold that can open or close a switch (e.g" conduction path) depending on whether the threshold has been exceeded.

In one embodiment, a particular element can have multiple tags attached thereto. The tags can be set to operate when different temperatures are exceeded. In this manner an estimate of the actual temperature can be estimated by comparing the thresholds of the responding RFID tags. For example, if a particular element has three RFID tags connected to it that operate at 105, 110 and 115 degrees C, and only the those that operate at 105 and 110 degrees are sending signal to the reader 130, the controller 126 can determine that the temperature at the element is at least 110 degrees. Alternatively, each RFID could transmit it set point as part of it message to provide the controller with the needed information.

As will be more fully disclosed below, embodiments herein can have a technical effect of allowing for the wireless communication of temperature (or over temperature conditions) of elements of an actuator system 100 without having to provide wires for transmission of power and data to temperature sensors that can be located in weight sensitive regions of an aircraft such as an aircraft wing. Such an effect can be realized because the breaking of the link (e.g., the link no longer conducts electricity) between the contacts through a temperature sensitive element will cause an RFID element to be enabled to transmit information to the RFID reader 130. As long as the temperature set point has not been exceeded, the temperature sensitive element will serve to electrically connect and thereby disable the antennas of an RFID element (or RFID tag). Further, embodiments herein can also accomplish one or more of these effects while adding almost no weight to the aircraft because the RFID tags do not require external wiring. In the event that the RFID tag is a passive tag, the RFID reader may send an interrogation signal that causes the RFID to transmit information to the reader.

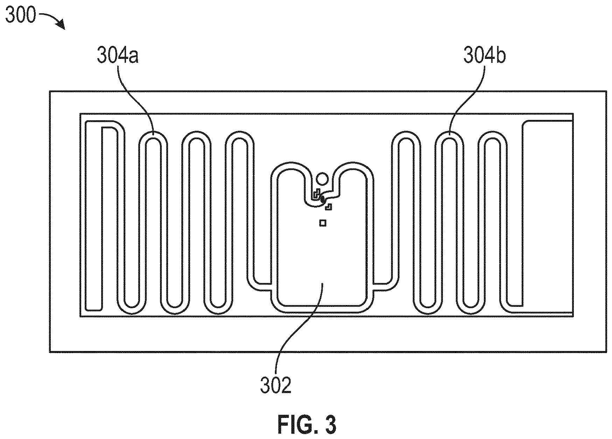

FIG. 3 shown an example of an RFID tag 300 that is used according to the present invention. The tag 300 includes a controller 302 and an antenna 303. In general, if the RFID tag 300 is a passive tag it collects energy from a nearby RFID reader's interrogating signal (e.g., radio waves) via the antenna 303. The controller 302 can include a storage element to store power received by the antenna 304. The storage element can then provide power to logic and other circuitry that are used to drive the antennas to send a signal back to the reader (e.g., reader 130 in FIG. 2). The signal can include an identification of the tag/actuator that it is coupled to in one embodiment.

According to the present invention, the antenna 304 includes two portions 304a, 304b. Herein, when these two portions are connected together, the RFID tag 300 is in the socalled "disabled state" and cannot transmit information. This disabled state can be referred to as a "normal" state where a threshold temperature has not been exceeded.

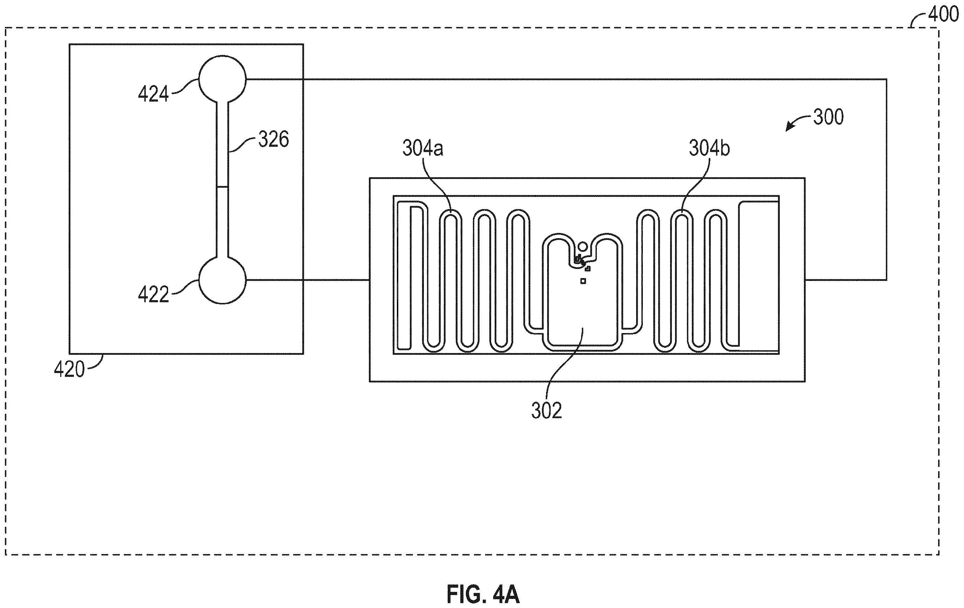

As shown in FIG. 4A, according to the present invention, the RFID tag 300 is connected to first and second contacts 422, 424 of a temperature sensitive element 420. Such a connected system can be referred to as a temperature RFID tag 400 herein.

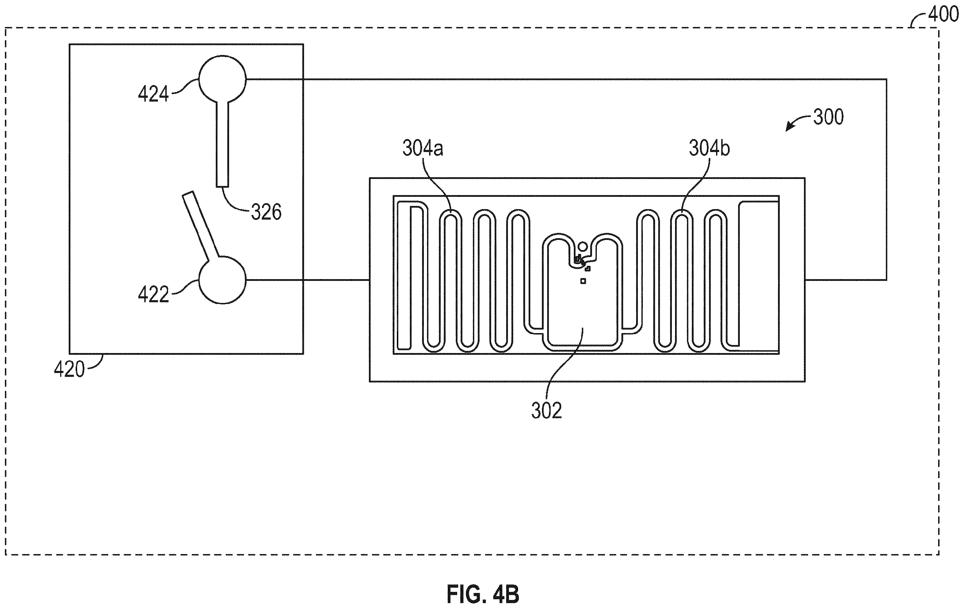

In general, when the temperature is below a certain threshold, the two portions 304a, 304b of antennal 304 are shorted together (see short connection 326). Thus, the temperature RFID tag 400 does not transmit information to a reader when interrogated. However, when the temperature is above a threshold value, the short connection 326 is interrupted as shown in FIG. 4B.

As shown, a first antenna portion 304a is connected to first contact 422 and the second antenna portion 404b is connected to the second contact 424 of FIGs. 4A and 4B. Of course, the connections could be reversed and second antenna portion 404b would be connected to first contact 422 and first antenna portion 304a would be connected to second contact 324.

Regardless, as shown, the conduction path 326 is electrically coupling the first antenna portion to the second antenna portion to place the RFID tag 400 in the disabled state so it cannot transmit information. This occurs when the temperature at or near the temperature sensitive element 420 (e.g., the temperature of the element to which the temperature RFID tag 400 is attached) has not or does not currently exceed the threshold temperature.

As shown in FIG. 4B, when the short connection 326 has been broken and electrically is no longer coupling the first antenna portion to the second antenna portion to place the RFID tag 400 in the disabled state. In such a case, the RFID tag 300 in particular and the temperature RFID tag 400 in general is operative and can transmit information.

As will be understood based on the above discussion, when the temperature sensitive element 420 "opens" as shown in FIG. 4B, an electrical pathway between the first and second contact 322, 324 is not established and the temperate RFID tag 400 can inform any RFID reader on the aircraft or on the ground that a over-temperature is occurring or has occurred. Further, while operating under normal conditions, the RFID tag is shorted and does not provide a response to a reader.

The temperature sensitive element 420 is, according to the present invention, a sensor that includes a switch or element that cause for a disruption of an electrical signal path when the threshold is exceeded. Such device are known and not discussed further herein.

Of note is that the RFID reader 130 of FIG. 2 can be located on the aircraft or on the ground as shown by RFID reader 130'. The RFID reader 130' can read the temperature RFID tags while the aircraft is on the ground, or during takeoff, landing or approach. Thus, the teachings herein can provide for real time over-temperature indications for a pilot and can also inform ground crew locations of overheated or over heating system elements.

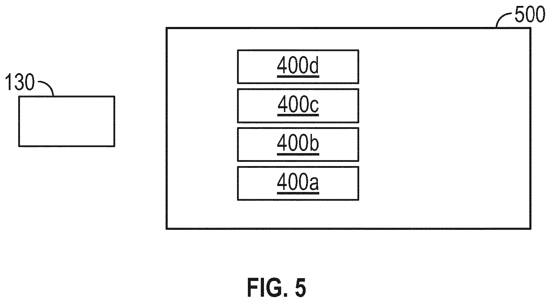

Further, in one embodiment, multiple temperature RFID tags can be provided on one system element. For example, as shown in FIG. 5 a system element 500 is shown as having four temperature RFID sensors 400a-400d. Each sensor can have a different threshold temperature. For example, a first temperature RFID sensor 400a can have a first temperature threshold of 30 degrees C, a second temperature RFID sensor 400b can have a second temperature threshold of 35 degrees C, a third temperature RFID sensor 400c can have a third temperature threshold of 40 degrees C, and a fourth temperature RFID sensor 400d can have a fourth temperature threshold of 35 degrees C. An RFID reader 130 can send an interrogation signal to the four temperature RFID sensors 400a-400d and depending on which of the four temperature RFID sensors 400a-400d responds, determine the temperature of the element 500. For example, if the first through third temperature RFID sensors 400a-400c respond and the fourth temperature RFID sensors 400d does not, it can be determined that the temperature of the element 500 is above 35 and below 40 degrees C.

Any of the four temperature RFID sensors 400a-400d or any prior described sensor can return an indication of the part number/type of part to which the tag is attached, a position location, the threshold voltage etc.

## Claims

1. An actuator system (100) for an aircraft, the system comprising:
one or more mechanical elements;
a temperature radio frequency identification (RFID) tag (400) connected to at least one of the one or more mechanical elements, the temperature RFID tag (400) including an RFID tag (300 that includes:
an antenna (304) that includes:
a first antenna portion (304a),
a second antenna portion (304b);
a controller (302) connected between the first and second antenna portions (304a, 304b),
wherein the antenna (304) is connected to a temperature sensitive element (420) to form a switch that can open and close and that includes:
a first contact (422) connected to the first antenna portion (304a);
a second contact (424) connected to the second antenna portion (304b); and
a conduction path (326) between the first and second contacts (422, 424) that is configured to be:
shorted when a temperature is below a threshold, whereby the RFID tag (300) is in a disabled state; and opened when the temperature is above the threshold, whereby the RFID tag (300) is enabled;
wherein in a normal operational state, when the RFID tag (300) is in the disabled state, the conduction path creates an electrical pathway between the first contact (422) and second contact (424) to electrically connect the first antenna portion (304a) and the second antenna portion (304b) via the conduction path (326), and the switch is closed, and when in an over-temperature state, and the RFID tag (300) is enabled, the conduction path (326) does not create an electrical pathway between the first contact (422) and the second contact (424), the two antenna portions (304a, 304b) are not electrically connected to one another through the conduction path (326), and the switch is opened; and
wherein when the temperature sensitive element (420) is in the normal operation state the RFID tag (300) does not transmit information, and when the temperature sensitive element (420) is in the over-temperature state the RFID tag (300) does transmit information.

2. The system of claim 1, wherein the temperature sensitive element (420) includes a temperature sensor with a threshold and that causes the two antenna portions (304a, 304b) to not be electrically connected to one another through the conduction path (326) when the temperature sensor determines that the threshold has been exceeded.

3. The system of any preceding claim, wherein when the temperature sensitive element (420) is in the over-temperature state the temperature RFID tag (400) transmits information that identifies the mechanical element to which it is attached.

4. The system of any preceding claim, wherein the mechanical element is an aircraft slat or flap actuator.

5. The system of any preceding claim, comprising one or more of: a slat disconnect sensor (110) slat skew sensor (112), a slat/flap position sensor (114), a slat position sensor unit mounting bracket (116), a flap position sensor unit mounting bracket (118), a flap skew sensor (120), a flap drop box (122), and an angle gear box (124).

6. A method of determining that a mechanical element of an actuator system (100) has experienced an overheat condition, the method comprising: connecting a temperature radio frequency identification (RFID) tag (400) to one or more mechanical elements of the actuator system (100), the temperature RFID tag 2. (400) including: an RFID tag (300) that includes:
an antenna (304) that includes:
a first antenna portion (304a),
a second antenna portion (304b);
a controller (302) connected between the first and second antenna portions (304a, 304b),
wherein the antenna (304) is connected to a temperature sensitive element (420) that includes: a first contact (422); a second contact (424); and a conduction path (326) between the first and second contacts (422, 424) that is configured to be: shorted when a temperature is below a threshold, whereby the RFID tag (300) is in a disabled state; and opened when the temperature is above the threshold, whereby the RFID tag (300) is enabled; wherein in a
normal operational state, when the RFID tag (300) is in the disabled state, the conduction path (326) creates an electrical pathway between the first contact (422) and second contact (424) to electrically connect the first antenna portion (304a) and the second antenna portion (304b) via the conduction path (326), and the switch is closed, and when in an over-temperature state, and the RFID tag (300) is enabled, the conduction path (326) does not create an electrical pathway between the first contact and the second contact (422, 424), the two antenna portions (304a, 304b) are not electrically connected to one another through the conduction path (326), and the switch is opened;
wherein when the temperature sensitive element (420) is in the normal operation state the RFID tag (300) does not transmit information and when the temperature sensitive element (420) is in the over-temperature state the RFID tag (300) does transmit information; and
receiving, at an RFID reader (130), information from the temperature RFID tag (400).

7. The method of claim 6, wherein the RFID reader (130) sends an interrogation signal during a flight and receives the information back during the flight, optionally wherein the RFID reader (130) is located within the aircraft.

8. The method of claim 6, wherein the RFID reader (130) sends the interrogation signal after the conclusion of a flight while the aircraft is on the ground.

9. The method of claim 8, wherein the RFID reader (130) is located outside of the aircraft.

10. The method of any of claims 6 to 9, further comprising: sending an interrogation signal from the RFID reader (130) to the RFID tag (300) that causes the RFID tag (300) to transmit information.

## Patentansprüche

1. Aktuatorsystem (100) für ein Flugzeug, wobei das System Folgendes umfasst:
ein oder mehrere mechanische Elemente;
ein Temperatur-Radio-Frequency-Identification(RFID)-Tag (400), das mit mindestens einem des einen oder der mehreren mechanischen Elemente verbunden ist, wobei das Temperatur-RFID-Tag (400) ein RFID-Tag (300) einschließt, das Folgendes einschließt:
eine Antenne (304), die Folgendes einschließt:
einen ersten Antennenteil (304a),
einen zweiten Antennenteil (304b);
eine Steuerung (302), die zwischen dem ersten und zweiten Antennenteil (304a, 304b) verbunden ist,
wobei die Antenne (304) mit einem temperaturempfindlichen Element (420) verbunden ist, um einen Schalter zu bilden, der sich öffnen und schließen kann und der Folgendes einschließt:
einen ersten Kontakt (422), der mit dem ersten Antennenteil (304a) verbunden ist;
einen zweiten Kontakt (424), der mit dem zweiten Antennenteil (304b) verbunden ist; und
einen Leitungsweg (326) zwischen dem ersten und zweiten Kontakt (422, 424), der konfiguriert ist, um:
kurzgeschlossen zu werden, wenn eine Temperatur unter einer Schwelle liegt, wobei sich das RFID-Tag (300) in einem deaktivierten Zustand befindet; und geöffnet zu werden, wenn die Temperatur über der Schwelle liegt, wobei das RFID-Tag (300) aktiviert ist;
wobei in einem normalen Betriebszustand, wenn sich das RFID-Tag (300) in dem deaktivierten Zustand befindet, der Leitungsweg einen elektrischen Pfad zwischen dem ersten Kontakt (422) und dem zweiten Kontakt (424) erzeugt, um den ersten Antennenteil (304a) und den zweiten Antennenteil (304b) über den Leitungsweg (326) elektrisch zu verbinden, und der Schalter geschlossen ist, und in einem Übertemperaturzustand und wenn das RFID-Tag aktiviert ist, der Leitungsweg (326) keinen elektrischen Pfad zwischen dem ersten Kontakt (422) und dem zweiten Kontakt (424) erzeugt, die zwei Antennenteile (304a, 304b) nicht durch den Leitungsweg (326) elektrisch miteinander verbunden sind, und der Schalter geöffnet ist; und
wobei, wenn sich das temperaturempfindliche Element (420) in dem normalen Betriebszustand befindet, das RFID-Tag (300) keine Informationen überträgt, und wenn sich das temperaturempfindliche Element (420) in dem Übertemperaturzustand befindet, das RFID-Tag (300) Informationen überträgt.

2. System nach Anspruch 1, wobei das temperaturempfindliche Element (420) einen Temperatursensor mit einer Schwelle einschließt und das veranlasst, dass die zwei Antennenteile (304a, 304b) nicht durch den Leitungsweg (326) elektrisch miteinander verbunden sind, wenn der Temperatursensor bestimmt, dass die Schwelle überschritten wurde.

3. System nach einem vorhergehenden Anspruch, wobei, wenn sich das temperaturempfindliche Element (420) in dem Übertemperaturzustand befindet, das Temperatur-RFID-Tag (400) Informationen überträgt, die das mechanische Element identifizieren, woran es angebracht ist.

4. System nach einem vorhergehenden Anspruch, wobei das mechanische Element ein Flugzeugvorflügel oder Klappenaktor ist.

5. System nach einem vorhergehenden Anspruch, umfassend eines oder mehrere der Folgenden: einen Vorflügeltrennsensor (110), einen Vorflügel-Skew-Sensor (112), einen Vorflügel/Klappenpositionssensor (114), einen Montagebügel (116) einer Vorflügelpositionssensoreinheit, einen Montagebügel (118) einer Klappenpositionssensoreinheit, einen Klappen-Skew-Sensor (120), eine Klappen-Dropbox (122) und ein Winkelgetriebe (124).

6. Methode zur Bestimmung, dass ein mechanisches Element eines Aktorsystems (100) einen Überhitzungszustand erfahren hat, wobei die Methode Folgendes umfasst:
Verbinden eines Temperatur-Radio-Frequency-Identification(RFID)-Tag (400) mit einem oder mehreren mechanischen Elementen des Aktorsystems (100), wobei das Temperatur-RFID-Tag (400) Folgendes einschließt: ein RFID-Tag (300), das Folgendes einschließt:
eine Antenne (304), die Folgendes einschließt:
einen ersten Antennenteil (304a),
einen zweiten Antennenteil (304b);
eine Steuerung (302), die zwischen dem ersten und zweiten Antennenteil (304a, 304b) verbunden ist,
wobei die Antenne (304) mit einem temperaturempfindlichen Element (420) verbunden ist, das Folgendes einschließt: einen ersten Kontakt (422); einen zweiten Kontakt (424); und einen Leitungsweg (326) zwischen dem ersten und zweiten Kontakt (422, 424), der konfiguriert ist, um:
kurzgeschlossen zu werden, wenn eine Temperatur unter einer Schwelle liegt, wobei sich das RFID-Tag (300) in einem deaktivierten Zustand befindet; und geöffnet zu werden, wenn die Temperatur über der Schwelle liegt, wobei das RFID-Tag (300) aktiviert ist; wobei in einem normalen Betriebszustand, wenn sich das RFID-Tag (300) in dem deaktivierten Zustand befindet, der Leitungsweg (326) einen elektrischen Pfad zwischen dem ersten Kontakt (422) und dem zweiten Kontakt (424) erzeugt, um den ersten Antennenteil (304a) und den zweiten Antennenteil (304b) über den Leitungsweg (326) elektrisch zu verbinden, und der Schalter geschlossen ist, und in einem Übertemperaturzustand und wenn das RFID-Tag (300) aktiviert ist, der Leitungsweg (326) keinen elektrischen Pfad zwischen dem ersten Kontakt und dem zweiten Kontakt (422, 424) erzeugt, die zwei Antennenteile (304a, 304b) nicht durch den Leitungsweg (326) elektrisch miteinander verbunden sind, und der Schalter geöffnet ist;
wobei, wenn sich das temperaturempfindliche Element (420) in dem normalen Betriebszustand befindet, das RFID-Tag (300) keine Informationen überträgt, und wenn sich das temperaturempfindliche Element (420) in dem Übertemperaturzustand befindet, das RFID-Tag (300) Informationen überträgt; und
an einem RFID-Lesegerät (130) Informationen von dem Temperatur-RFID-Tag (400) zu empfangen.

7. Methode nach Anspruch 6, wobei das RFID-Lesegerät (130) ein Abfragesignal während eines Flugs sendet und die Informationen während des Flugs zurückerhält, wobei sich das RFID-Lesegerät (130) gegebenenfalls in dem Flugzeug befindet.

8. Methode nach Anspruch 6, wobei das RFID-Lesegerät (130) das Abfragesignal nach dem Abschluss eines Flugs sendet, während sich das Flugzeug auf dem Boden befindet.

9. Methode nach Anspruch 8, wobei sich das RFID-Lesegerät (130) außerhalb des Flugzeugs befindet.

10. Methode nach einem der Ansprüche 6 bis 9, ferner umfassend:
Senden eines Abfragesignals von dem RFID-Lesegerät (130) an das RFID-Tag (300), das veranlasst, dass das RFID-Tag (300) Informationen überträgt.

## Revendications

1. Système d'actionneur (100) pour un aéronef, le système comprenant :
un ou plusieurs éléments mécaniques ;
une étiquette d'identification par radiofréquence (RFID) de température (400) connectée à au moins l'un des un ou plusieurs éléments mécaniques, l'étiquette RFID de température (400) comportant une étiquette RFID (300) qui comporte :
une antenne (304) qui comporte :
une première partie d'antenne (304a),
une seconde partie d'antenne (304b),
un dispositif de commande (302) connecté entre les première et seconde parties d'antenne (304a, 304b),
dans lequel l'antenne (304) est connectée à un élément sensible à la température (420) pour former un commutateur qui peut s'ouvrir et se fermer et qui comporte :
un premier contact (422) connecté à la première partie d'antenne (304a) ;
un second contact (424) connecté à la seconde partie d'antenne (304b) ; et
un chemin de conduction (326) entre les premier et second contacts (422, 424) qui est configuré pour être :
court-circuité lorsqu'une température est inférieure à un seuil, moyennant quoi l'étiquette RFID (300) est dans un état désactivé ; et ouvert lorsque la température est supérieure au seuil, moyennant quoi l'étiquette RFID (300) est activée ;
dans lequel dans un état de fonctionnement normal, lorsque l'étiquette RFID (300) est dans l'état désactivé, le chemin de conduction crée un chemin électrique entre le premier contact (422) et le second contact (424) pour connecter électriquement la première partie d'antenne (304a) et la seconde partie d'antenne (304b) via le chemin de conduction (326), et le commutateur est fermé, et lorsqu'il est dans un état de surchauffe et que l'étiquette RFID (300) est activée, le chemin de conduction (326) ne crée pas de chemin électrique entre le premier contact (422) et le second contact (424), les deux parties d'antenne (304a, 304b) ne sont pas connectées électriquement l'une à l'autre à travers le chemin de conduction (326), et le commutateur est ouvert ; et
dans lequel lorsque l'élément sensible à la température (420) est dans l'état de fonctionnement normal, l'étiquette RFID (300) ne transmet pas d'informations, et lorsque l'élément sensible à la température (420) est dans l'état de surchauffe, l'étiquette RFID (300) transmet des informations.

2. Système selon la revendication 1, dans lequel l'élément sensible à la température (420) comporte un capteur de température avec un seuil et qui amène les deux parties d'antenne (304a, 304b) à ne pas être connectées électriquement l'une à l'autre à travers le chemin de conduction (326) lorsque le capteur de température détermine que le seuil a été dépassé.

3. Système selon une quelconque revendication précédente, dans lequel lorsque l'élément sensible à la température (420) est dans l'état de surchauffe, l'étiquette RFID de température (400) transmet des informations qui identifient l'élément mécanique auquel il est attaché.

4. Système selon une quelconque revendication précédente, dans lequel l'élément mécanique est un actionneur de lamelle ou de volet.

5. Système selon une quelconque revendication précédente, comprenant l'un ou plusieurs parmi : un capteur de déconnexion de lamelle (110), un capteur d'inclinaison de lamelle (112), un capteur de position de lamelle/volet (114), un support de montage d'unité de capteur de position de lamelle (116), un support de montage d'unité de capteur de position de volet (118), un capteur d'inclinaison de volet (120), un dispositif de libération de volet (122) et un dispositif de renvoi d'angle (124).

6. Procédé de détermination qu'un élément mécanique d'un système d'actionneur (100) a subi une surchauffe, le procédé comprenant :
la connexion d'une étiquette d'identification par radiofréquence (RFID) de température (400) à un ou plusieurs éléments mécaniques du système d'actionneur (100), l'étiquette RFID de température (400) comportant : une étiquette RFID (300) qui comporte :
une antenne (304) qui comporte :
une première partie d'antenne (304a),
une seconde partie d'antenne (304b),
un dispositif de commande (302) connecté entre les première et seconde parties d'antenne (304a, 304b),
dans lequel l'antenne (304) est connectée à un élément sensible à la température (420) qui comporte : un premier contact (422) ; un second contact (424) ; et un chemin de conduction (326) entre les premier et second contacts (422, 424) qui est configuré pour être :
court-circuité lorsqu'une température est inférieure à un seuil, moyennant quoi l'étiquette RFID (300) est dans un état désactivé ; et ouvert lorsque la température est supérieure au seuil, moyennant quoi l'étiquette RFID (300) est activée ; dans lequel dans un état de fonctionnement normal, lorsque l'étiquette RFID (300) est dans l'état désactivé, le chemin de conduction (326) crée un chemin électrique entre le premier contact (422) et le second contact (424) pour connecter électriquement la première partie d'antenne (304a) et la seconde partie d'antenne (304b) via le chemin de conduction (326), et le commutateur est fermé, et lorsqu'il est dans un état de surchauffe et que l'étiquette RFID (300) est activée, le chemin de conduction (326) ne crée pas de chemin électrique entre le premier contact et le second contact (422, 424), les deux parties d'antenne (304a, 304b) ne sont pas connectées électriquement l'une à l'autre à travers le chemin de conduction (326), et le commutateur est ouvert ;
dans lequel lorsque l'élément sensible à la température (420) est dans l'état de fonctionnement normal, l'étiquette RFID (300) ne transmet pas d'informations et lorsque l'élément sensible à la température (420) est dans l'état de surchauffe, l'étiquette RFID (300) transmet des informations ; et
la réception, au niveau d'un lecteur RFID (130), d'informations depuis l'étiquette RFID de température (400).

7. Procédé selon la revendication 6, dans lequel le lecteur RFID (130) envoie un signal d'interrogation pendant un vol et reçoit les informations en retour pendant le vol, éventuellement dans lequel le lecteur RFID (130) est situé à l'intérieur de l'aéronef.

8. Procédé selon la revendication 6, dans lequel le lecteur RFID (130) envoie le signal d'interrogation après la fin d'un vol pendant que l'aéronef est au sol.

9. Procédé selon la revendication 8, dans lequel le lecteur RFID (130) est situé à l'extérieur de l'aéronef.

10. Procédé selon l'une quelconque des revendications 6 à 9, comprenant en outre :
l'envoi d'un signal d'interrogation depuis le lecteur RFID (130) à l'étiquette RFID (300) qui amène l'étiquette RFID (300) à transmettre des informations.
